# EUROPEAN PATENT SPECIFICATION

(11) **EP 3 779 635 B1**
(45) Date of publication and mention of the grant of the patent: **04.06.2025**
(21) Application number: 18914398.5
(22) Date of filing: 29.11.2018
(51) Int. Cl.: G06F 1/16, G06F 3/041, G09G 3/20

(54) **INTERACTIVE SMART TABLET AND DATA PROCESSING METHOD AND DEVICE THEREOF**
INTERAKTIVES INTELLIGENTES TABLET UND DATENVERARBEITUNGSVERFAHREN SOWIE VORRICHTUNG DAFÜR
TABLETTE INTELLIGENTE INTERACTIVE ET PROCÉDÉ ET DISPOSITIF DE TRAITEMENT DE DONNÉES ASSOCIÉS

(30) Priority: 09.04.2018 CN 201810311724
(43) Date of publication of application: 17.02.2021
(73) Proprietor: Guangzhou Shiyuan Electronic Technology Company Limited, Guangzhou, Guangdong 510530 (CN); Guangzhou Shizhen Information Technology Co., Ltd., Guangzhou, Guangdong 510663 (CN)
(72) Inventor: QIU, Weibo, Guangdong 510663 (CN)
(74) Representative: ip21 Ltd
(86) International application number: PCT/CN2018/118240
(87) International publication number: WO 2019/196426

(56) References cited:
- WO-A1-2017/148412
- CN-A- 103 186 323
- CN-A- 106 412 655
- CN-A- 106 412 655
- CN-A- 106 990 908
- CN-A- 108 845 613
- KR-A- 20130 084 002
- US-A1- 2016 041 689
- US-A1- 2018 329 600

## Description

### TECHNICAL FIELD

The present application relates to the field of interactive white boards and, in particular, to an interactive white board, and a data processing method and device for same.

### BACKGROUND

An interactive white board usually has multiple channel modules, such as an Android module and a PC module. Therefore, when using different channel modules, it is necessary to send touch data to a corresponding module.

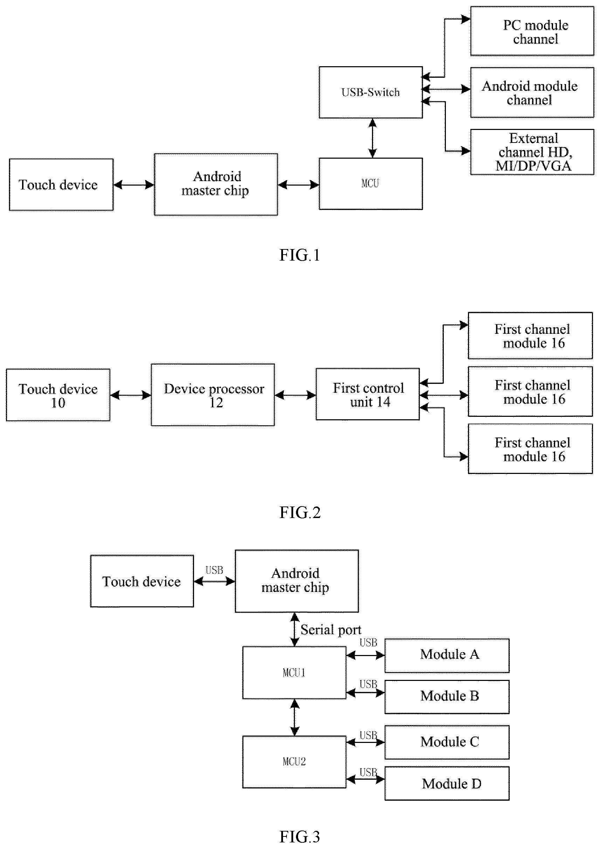

In the prior art, a usual way is to set a USB-Switch switch between a channel module and a processor. FIG. 1 is a schematic diagram of a system for distributing touch data in the prior art. As shown in FIG. 1, distribution channels for touch data in this example include a PC module channel, an Android module channel, and external channels HD, MI/DP/VGA, etc. The touch device is configured to generate the touch data, and the Android master chip controls on-off between the USB-Switch and each channel.

In the above example, the Android master chip uses an MCU to control the USB-Switch to disconnect and reconnect D+/D- data lines of a USB bus. However, once performing the reconnection, there is unnecessary time-consuming, resulting in unavailability of the touch device for a period of time. The interactive white board needs to re-enumerate hardware USB plugging and unplugging, which usually takes 2 to 5 seconds. During this time period, the interactive white board does not recognize the touch device, and the touch device cannot be operated. CN106412655A discloses a touch TV and controlling method and device thereof to

solve the existing technology problem of using a touch screen to realize the function controlling of the touch TV itself. WO2017/148412Al provides a data processing method and apparatus, reducing abnormal control caused by packet loss. US2016/0041689Al discloses a touch panel system, compensating touch information between certain touch position and next position.

With regard to the problem in the prior art that there is excessive time consumption due to the necessity of re-enumerating a touch device when a touch display channel is switched through a switch, no effective solution has been proposed yet.

### SUMMARY

At least some embodiments of the present application provide a data processing method, device and system for an interactive white board, and an interactive white board, so as to at least solve the technical problem in the prior art that there is excessive time consumption due to the necessity of re-enumerating a touch device when a touch display channel is switched through a switch.

According to one aspect of one of embodiments of the present application, there is provided an interactive white board, including all the features of appended claim 1.

Optionally, the interactive white board further includes: a second control unit connected in series with the first control unit, where the second control unit is also connected to multiple second channel modules through corresponding display channels; where the first control unit is further configured to send the second touch data to the second control unit when the display channel corresponding to the second touch data is a display channel of any second channel module, so as to enable the second control unit to send the touch data to the corresponding display channel.

According to another aspect of one of the embodiments of the present application, there is also provided a data processing method for an interactive white board, including all the features of appended claim 4.

Optionally, enumerating the touch device; selecting data generated by the touch device out of the received data according to a device identifier of the touch device; and selecting, according to characteristic information of touch data, the touch data out of the data generated by the touch device as the first one touch data.

Optionally, a display channel has a corresponding identifier, determining, according to the current display channel of the interactive white board, an identifier for marking the first touch data; and marking the first touch data according to the identifier to generate the second touch data.

Optionally, detecting whether the display channel changes, where the display channel changes when the interactive white board switches a channel module; in case the display channel changes, detecting whether a last set of touch data before the display channel changes is in its integrity; if the last set of touch data before the display channel changes is not in its integrity, using supplement points to supplement an end point of the last set of touch data before the display channel changes and a start point of a first set of touch data after the display channel changes, where the supplement points are first touch points after the display channel changes.

Optionally, acquiring a target bit corresponding to the current display channel of the interactive white board, where the identifier includes multiple bits, and each bit corresponds to a channel module; setting a value of the target bit in the identifier to be opposite to a value of a remaining bit to obtain the identifier for marking the first touch data.

Optionally, using the first touch data to drive an input subsystem; and responding to the first touch data.

According to another aspect of the embodiments of the present application, there is also provided a data processing method for an interactive white board, which includes: receiving second touch data sent by a device processor, where the second touch data includes an identifier corresponding to a current display channel of the interactive white board; reading the identifier and determining the current display channel; and distributing the second touch data to a channel module corresponding to the current display channel.

Optionally, sending the second touch data to a data queue of the channel module; and sequentially distributing the second touch data in the data queue to the channel module.

According to another aspect of one of the embodiments of the present application, there is also provided a data processing device for an interactive white board, including: a first receiving module, configured to receive first touch data generated by a touch device; an adding module, configured to mark the first touch data according to a current display channel of the interactive white board to obtain second touch data, where the second touch data includes an identifier corresponding to the current display channel; and a sending module, configured to send the second touch data to a control unit, where the control unit is also configured to distribute the second touch data to the corresponding channel module according to the identifier.

According to another aspect of one of the embodiments of the present application, there is also provided a data processing device for an interactive white board, including: a second receiving module, configured to receive second touch data sent by a device processor, where the second touch data includes an identifier corresponding to a current display channel of the interactive white board; a reading module, configured to read the identifier and determine the current display channel; and a distributing module, configured to distribute the second touch data to a channel module corresponding to the current display channel.

According to another aspect of one of the embodiments of the present application, a storage medium is also provided. The storage medium includes all the features of appended claim 6.

According to another aspect of one of the embodiments of the present application, a processor is also provided, comprising all the features of appended claim 7.

In at least some of the embodiments of the present application, touch data is marked to enable a control unit to distribute the touch data to a corresponding channel module, and thus a connection relationship between the channel module and the control unit can be maintained, without the requirement of disconnection and reconnection through a switch. Therefore, after the interactive white board is turned on again, there is no need to re-enumerate the USB device, thereby solving the problem in the prior art that there is excessive time consumption due to the necessity of re-enumerating a touch device when a touch display channel is switched through a switch. Moreover, the touch device can be used immediately after the display channel is switched, which improves user comfort.

### BRIEF DESCRIPTION OF DRAWINGS

The drawings described herein are used to provide a further understanding of the application and constitute a part of the application. Exemplary embodiments of the application and description thereof are used to explain the application, and do not constitute an improper limitation of the application. In the attached drawings:
FIG. 1 is a schematic diagram of a system for distributing touch data in the prior art;
FIG. 2 is a schematic diagram of an interactive white board according to an embodiment of the present application;
FIG. 3 is a schematic diagram of an optional interactive white board according to an embodiment of the present application;
FIG.4 is a flowchart of a data processing method for an interactive white board according to an embodiment of the present application;
FIG. 5 is a flowchart of processing first touch data by a device processor according to an embodiment of the present application;
FIG. 6 is a data interaction diagram of an optional touch event according to an embodiment of the present application;
FIG. 7 is a flowchart of a data processing method for an interactive white board according to an embodiment of the present application;
FIG. 8 is a schematic diagram of a data processing device for an interactive white board according to an embodiment of the present application; and
FIG. 9 is a schematic diagram of a data processing device for an interactive white board according to an embodiment of the present application.

### DESCRIPTION OF EMBODIMENTS

In order to enable those skilled in the art to better understand the solutions of the application, the technical solutions in the embodiments of the application will be clearly and completely described below in conjunction with the drawings in the embodiments of the application. Obviously, the described embodiments are only a part of the embodiments of the present application, rather than all the embodiments.

It should be noted that the terms "first" and "second" in the description and claims of the application and the above-mentioned drawings are used to distinguish similar objects, and are not necessarily used to describe a specific sequence or sequence. It should be understood that data used in this way is interchangeable under appropriate circumstances, so that the embodiments of the present application described herein can be implemented in a sequence other than those illustrated or described herein. In addition, the terms "including" and "having" and any variation of them are intended to cover non-exclusive inclusions. For example, processes, methods, systems, products, or devices that include a series of steps or units are not necessarily limited to those clearly listed steps or units, but may include other steps or units that are not clearly listed or that are inherent to these processes, methods, products, or devices.

### Embodiment 1

According to an embodiment of the present application, an embodiment of an interactive white board is provided. FIG. 2 is a schematic diagram of an interactive white board according to an embodiment of the present application. As shown in FIG. 2, the system includes:

A touch box 10, configured to generate first touch data.

Optionally, the touch device may have functions such as electromagnetic touch, infrared touch, and capacitive touch. When a user operates the touch device, the touch device generates first touch data.

A device processor 12, connected to the touch device, and configured to mark the first touch data according to a current display channel to obtain second touch data, where the second touch data includes an identifier corresponding to the current display channel.

Optionally, the above device processor is a master processor of the system, which can be a processing chip, such as an Android master chip. The channel module can be a PC module, an Android module, an external module, etc., and the current display channel can be one or multiple in number. The interactive white board usually displays two systems at the same time, that is, the current display channel is two in number. For example, for an interactive white board with a sidebar, the sidebar can display the content output by the display channel of the device processor (that is, the master chip of the interactive white board, running an Android system), and the master interface can display the content output by the external display channel.

In an optional embodiment, the channel module has a corresponding identifier, the device processor may add the identifier of the channel module to the received first touch data for the first control unit to recognize, and the marked touch data is the second touch data.

A first control unit 14, connected to the device processor, and is configured to distribute the second touch data to the display channel corresponding to the identifier in the second touch data.

Optionally, after receiving the second touch data, the first control unit reads the identifier therein and determines, according to the identifier, the channel module to which the second touch data needs to be distributed.

In the above solution, there is no need to switch the communication relationship between the control unit and the channel module through the USB switch. Instead, the control unit distributes the touch data to the corresponding channel module according to the identifier.

Multiple first channel modules 16, connected to the first control unit through corresponding data display channels, and are configured to receive the second touch data.

Optionally, the distribution of the touch data is controlled by the first control unit, and the first channel modules directly maintain connection relationships with the first control unit and only need to wait for the touch data.

It can be seen from the above that, in the above-mentioned embodiment of the present application, touch data is marked to enable a control unit to distribute the touch data to a corresponding channel module, and thus a connection relationship between the channel module and the control unit can be maintained, without the requirement of disconnection and reconnection through a switch. Therefore, after the interactive white board is turned on again, there is no need to re-enumerate the USB device, thereby solving the problem in the prior art that there is excessive time consumption due to the necessity of re-enumerating a touch device when a touch display channel is switched through a switch. Moreover, the touch device can be used immediately after the display channel is switched, which improves user comfort.

Optionally, according to the above embodiments of the present application, the above system also includes:
second control unit connected in series with the first control unit, where the second control unit is also connected to multiple second channel modules through corresponding display channels; and
where the first control unit is further configured to send the second touch data to the second control unit when the display channel corresponding to the second touch data is a display channel of any second channel module, so as to enable the second control unit to send the touch data to the corresponding channel module.

FIG. 3 is a schematic diagram of an optional interactive white board according to an embodiment of the present application. As shown in FIG. 3, the touch device is connected to the master chip, and the Android master chip (master processor) is connected to MCU1 (first control unit), MCU1 is connected to module A and module B (multiple first channel modules). At the same time, MCU1 is also connected in series with MCU2 (second control unit), and MCU2 is connected with module C and module D (multiple second channel modules). When the identifier of the touch data is an identifier corresponding to module A or module B, MCU1 distributes the touch data to module A or module B. When the identifier of the touch data is an identifier corresponding to module C or module D, MCU1 distributes the touch data to MCU2, and MCU2 distributes it to module C or module D.

It should be noted that this embodiment is applied to an example scenario where one control unit is cascaded, also, more control units can be cascaded in this solution.

### Embodiment 2

According to an embodiment of the present application, an embodiment of a data processing method for an interactive white board is provided. It should be noted that the steps shown in the flowchart of the accompanying drawings can be executed in a computer system with a set of computer executable instructions, for example. Moreover, although a logical sequence is shown in the flowchart, in some cases, the steps shown or described may be performed in an order different from that here.

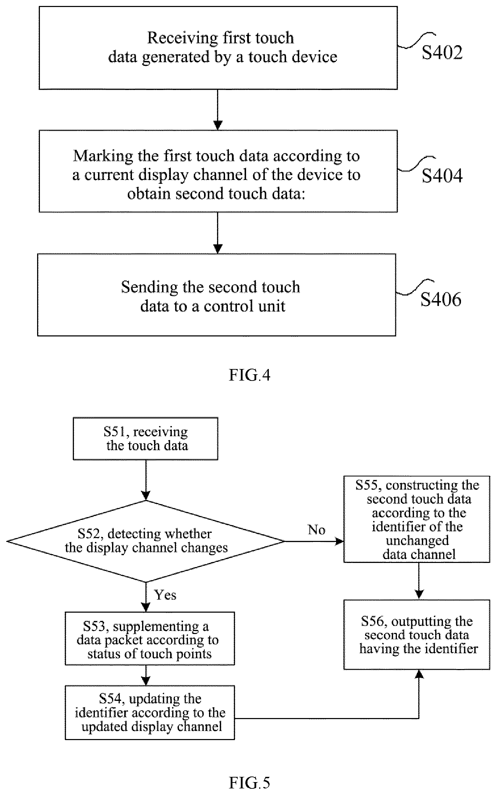

FIG. 4 is a flowchart of a data processing method for an interactive white board according to an embodiment of the present application. The data processing method for the interactive white board provided in this embodiment can be applied to the interactive white board in Embodiment 1. As shown in FIG. 4, the method includes the following steps:
Step S402: Receiving first touch data generated by a touch device.

Optionally, the steps in this embodiment may be executed by the device processor. The aforementioned touch device may have functions such as electromagnetic touch, infrared touch, and capacitive touch. When the user operates the touch device, the touch device generates first touch data.

Step S404: Marking the first touch data according to a current display channel of the interactive white board to obtain second touch data, where the second touch data includes an identifier corresponding to the current display channel.

Optionally, the channel module can be a PC module, an Android module, an external module, etc. In an optional embodiment, the marking the first touch data may be adding an identifier corresponding to the current display channel to the first touch data, where the adding position may be an identification bit in the data header of the first touch data, and the identification bit is configured to hold the identifier.

Step S406: Sending the second touch data to a control unit, where the control unit is further configured to distribute the second touch data to the corresponding display channel according to the identifier.

In the above steps, the device processor distributes the constructed second touch data to the control unit, and the control unit distributes the second touch data according to the identifier.

In an optional embodiment, after receiving the second touch data, the control unit reads the identification bit of the second touch data, and distributes the second touch data to a corresponding channel module according to the corresponding relationship between the identifier and the channel module.

It can be seen from the above that, in the above embodiments of the present application, first touch data generated by a touch device is received, and the first touch data is marked according to a current display channel of a channel module currently running on the interactive white board to obtain second touch data, where the second touch data includes an identifier corresponding to the current display channel, and the second touch data is sent to a control unit, where the control unit is further configured to distribute the second touch data to the corresponding channel module according to the identifier. Through marking the touch data to enable a control unit to distribute the touch data to a corresponding channel module, a connection relationship between the channel module and the control unit can be maintained without the requirement of disconnection and reconnection through a switch. Therefore, after the interactive white board first enumerates the touch device when it is turned on, there is no need to re-enumerate the USB device, thereby solving the technical problem in the prior art that there is excessive time consumption due to the necessity of re-enumerating a touch device when a touch display channel is switched through a switch. Moreover, the touch device can be used immediately after the display channel is switched, which improves user comfort.

Optionally, according to the embodiment of the present application, the receiving the first touch data generated by the touch device includes:
Step S4021: Enumerating the touch device.

Optionally, part of an HID-CORE file can be driven by an HID (Human Interface Device) to enumerate the touch device.

Step S4023: Selecting data generated by the touch device out of the received data according to a device identifier of the touch device.

Optionally, the above-mentioned device identifier may include a PID/VID (vendor ID/product ID, manufacturer ID/product ID), where different USB devices have different PIDs/VIDs, therefore, the device processor can identify the data from the touch device according to the PID/VID.

Step S4025: Selecting, according to characteristic information of touch data, the touch data out of the data generated by the touch device as the first touch data.

Optionally, the above-mentioned characteristic information includes a report ID and a data length. The report ID is configured to indicate the type of data. Therefore, the device processor can select out the touch data according to the type of data as the first touch data.

Optionally, according to the foregoing embodiment of the present application, the channel module has a corresponding identifier, and the marking the first touch data according to the current display channel of the interactive white board to obtain the second touch data includes:
Step S4041: Determining, according to the current display channel of the interactive white board, an identifier for marking the first touch data.

In an optional embodiment, the device processor is pre-stored with a corresponding relationship between the display channel and the identifier, and the device processor can determine its identifier after determining the current display channel of the interactive white board.

Step S4043: Marking the first touch data according to the identifier to generate the second touch data.

In an optional embodiment, the identifier of the first touch data may be carried in the header of the data packet of the first touch data.

Optionally, according to the embodiment of the present application, before determining the identifier for marking the first touch data according to the current display channel, the method further includes:
Step S4045: Detecting whether the display channel changes, where the display channel changes when the interactive white board switches a channel module.

Optionally, when the user switches the channel module, the display channel of the interactive white board changes. In an optional embodiment, taking a smart interactive white board as an example, the smart interactive white board has multiple types of channel modules, such as an Android module and a PC module, so as to provide multiple types of systems. When using the smart interactive white board, the user can perform system switching. When the user performs the system switching, the device processor detects that the display channel changes.

Step S4047: In case the display channel changes, detecting whether a last set of touch data before the display channel changes is in its integrity.

Optionally, the last set of data before the display channel changes is data about the last touch event before the display channel changes. A set of touch events has a flow of down-move-move...-move-up. In case the data about the set of touch events is in its integrity, it includes a start point data packet (down point data packet), a control point data packet (multiple move point data packets), and an end point data packet (up point data packet); and in case the touch events lack the start point data packet or the end point data packet, the touch data is not in its integrity.

In an optional embodiment, the smart interactive white board is still taken as an example. The smart interactive white board is currently running on the Android system, and the user is operating the touch screen. When the user has not lifted his finger, the smart interactive white board switches to the Windows system according to an instruction. In this case, the last set of touch events in the Android system does not have the up point data packet, and the Windows system does not have the down point data packet in the first set of touch events, and thus the two sets of touch events are not in their integrity.

Step S4049: If the last set of touch data before the display channel changes is not in its integrity, using supplementary points to supplement an end point of the last set of touch data before the display channel changes and a start point of the first set of touch event after the display channel changes, where the supplementary points are first touch points after the display channel changes.

Optionally, although the first set of touch events after the display channel changes does not have the down point data packet, the touch device can still receive the touch data, so the touch data of the first touch point received after the touch device is switched is used as both the up point data packet of the last set of touch events before the display channel changes and the down point data packet of the first set of touch events after the display channel is switched, so as to complement the two sets of touch events which are not in their integrity.

FIG. 5 is a flowchart of processing first touch data by a device processor according to an embodiment of the present application. The above solution will be described below with reference to FIG. 5.

Step S51: Receiving the touch data.

Step S52: Detecting whether the display channel changes. In case that the display channel changes, proceed with step S53, otherwise proceed with step S55.

Step S53: Supplementing a data packet according to status of touch points.

Optionally, for the above step, the data packet may be supplemented in a manner as described in step S4049, so that the touch events before and after the display channel changes are completely supplemented.

Step S54: Updating the identifier according to the updated display channel.

In the above steps, since the channel module is switched, the display channel needs to be updated. Each channel module corresponds to a different identifier. Therefore, the identifier of the updated channel module and the first touch data are used together to construct the second touch data.

Step S55: Constructing the second touch data according to the identifier of the unchanged display channel.

Step S56: Outputting the second touch data having the identifier.

In the above step S56, the second touch data is output to the control unit, and is distributed by the control unit to the corresponding channel module according to the identifier.

Optionally, according to the above embodiment of the present application, the determining, according to the current display channel of the interactive white board, the identifier for marking the first touch data includes:
Step S40411: Acquiring a target bit corresponding to the current display channel of the interactive white board, where the identifier includes multiple bits, and each bit corresponds to a channel module.

In an optional embodiment, the identifier may be one byte, which includes eight bits, and the data of each bit may indicate the corresponding channel module. The target bit is a currently running channel module, i.e., a channel module that needs to receive the touch data.

It should be noted that if there are many channel modules, the identifier can be set to two bytes usable by 16 channel modules.

In step S40413: Setting a value of the target bit in the identifier to be opposite to a value of a remaining bit to obtain the identifier for marking the first touch data.

In the above step S40413, if the value of the remaining bit is 0, the value of the target bit may be 1, and if the value of the remaining bit is 1, the data of the target bit may be 0. After each bit in the identifier is set to a corresponding value, the identifier of the first touch data is obtained.

In an optional embodiment, as shown in FIG. 3, the identifier is of 1 byte (8 bits), each bit represents the output of one module, the 0-th bit represents a USB bypass of module A; the 1-st bit represents a USB bypass of module B, and so on.

When modules A, B, C, and D all need touch data, set the identifier to 0x0F (hexadecimal number, the corresponding binary is 00001111), and the MCU judges whether to output USB touch data according to the identification bit.

In the case that only module A needs the touch data, the identifier is set to 0x01 (hexadecimal number, the corresponding binary is 00000001), and the MCU determines whether to output USB touch data according to the identification bit.

Optionally, according to the above embodiment of the present application, after enumerating the touch device, the method further includes:
Step S4010: Using the first touch data to drive an input subsystem.

Optionally, the above input subsystem may be an INPUT subsystem in a system processor, which is configured to manage a touch event received by the interactive white board.

Step S4012: Responding to the first touch data.

In the above step S4012, the first touch data reads the touch event from the system processor and executes it.

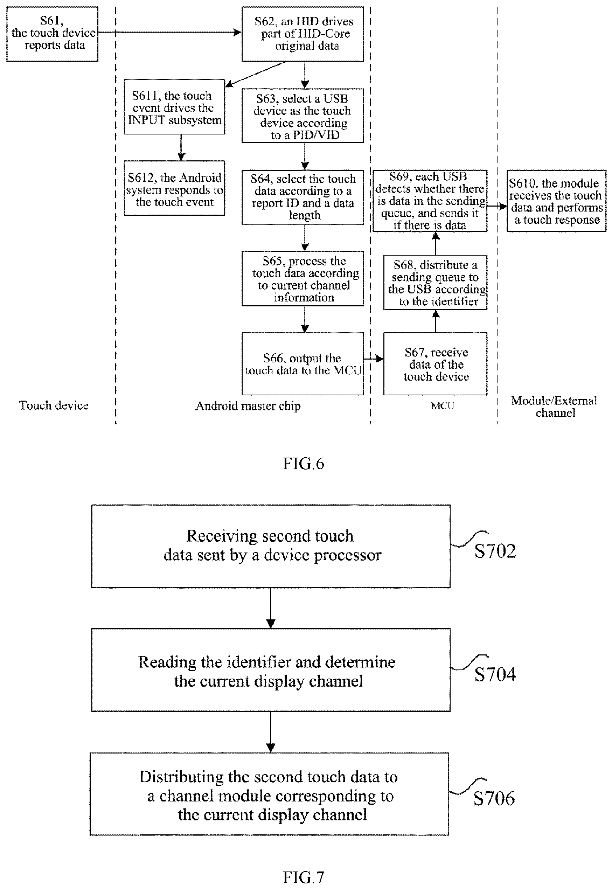

FIG. 6 is a data interaction diagram of an optional touch event according to an embodiment of the present application. The data flow of the touch event will be described below with reference to FIG. 6. Touch data circulates in the touch device, Android master chip (device processor), MCU (control unit), and module/external channel (channel module).

Step S61: The touch device reports data.

Optionally, when the user operates on the touch device, the touch data is generated.

Step S62: An HID (Human interface device) drives part of HID-CORE original data.

Optionally, the above step S62 is used to enumerate the touch device.

Step S63: Select a USB device as the touch device according to a PID/VID.

Optionally, the device processor can be connected to a variety of USB devices, and each USB device has a corresponding PID (Product, product ID) and VID (Product, manufacturer ID), so the touch device can be identified by the PID/VID.

Step S64: Select out the touch data according to a report ID and a data length.

In the above steps, the report ID and the data length are the characteristic information of the touch data, and the Android master chip selects the touch data out of various data according to the data characteristic of the touch data.

Step S65: Process the touch data according to current channel information.

Optionally, the current channel information is channel information of the currently running channel module, and each channel module corresponds to a corresponding identifier. Therefore, step S65 may be determining the identifier of the current channel, and adding the identifier of the current channel as a data header to the touch data. The specific processing flow can be shown in FIG. 5.

Step S66: Output the touch data to the MCU.

After step S65, the Android master chip sends the touch data added with the identifier to the MCU, and the MCU performs distribution to the channel module.

Step S67: Receive data of the touch device.

In the above step S67, the MCU receives the touch device data transmitted by the Android master chip.

Step S68: Distribute a sending queue to the USB according to the identifier.

Optionally, each channel module has a corresponding sending queue. In the above steps, the MCU extracts an identifier from the touch data, determines, according to the identifier, a channel module to which the identifier needs to be sent, and then sends the touch data to the sending queue of the channel module so that each channel module that needs touch data can receive the touch data, while a channel module that does not need touch data will not receive the touch data.

Step S69: Each USB detects whether there is data in the sending queue, and sends it if the data exists.

Optionally, the display channel of each channel module has a corresponding sending queue for storing the received touch events, and the touch events in the sending queue are sent to the channel module in sequence according to the received order.

Step S610: The module receives the touch data and performs a touch response.

Step S611: The touch event drives the INPUT subsystem.

Optionally, the aforementioned INPUT subsystem is configured to manage a touch event received by the Android master chip.

Step S612: The Android system responds to the touch event.

### Embodiment 3

According to an embodiment of the present application, an embodiment of a data processing method for an interactive white board is provided. It should be noted that the steps shown in the flowchart of the accompanying drawings can be executed in a computer system with a set of computer executable instructions, for example. Moreover, although a logical sequence is shown in the flowchart, in some cases, the steps shown or described may be performed in an order different from that.

FIG. 7 is a flowchart of a data processing method for an interactive white board according to an embodiment of the present application. The data processing method for the interactive white board provided in this embodiment can be applied to the interactive white board in Embodiment 1. As shown in FIG. 7, the method includes the following steps:
Step S702: Receiving second touch data sent by a device processor, where the second touch data includes an identifier corresponding to a current display channel of the interactive white board.

Optionally, the steps in this embodiment may be executed by the first control unit in Embodiment 1. The second touch data is generated by the device processor according to the identifier of the currently running channel module and the first touch data.

Step S704: Reading the identifier and determining the current display channel.

Specifically, due to the corresponding relationship between the identifier and the display channel, the control unit may determine the channel module corresponding to the touch data according to the identifier.

Step S706: Distributing the second touch data to a channel module corresponding to the current display channel.

After obtaining the second touch data, the channel module can respond to the second touch data.

It can be seen from the above that, in the foregoing embodiment of the present application, second touch data sent by a device processor is received, where the second touch data includes an identifier corresponding to a current display channel; the identifier is read and the current display channel is determined; and the second touch data is distributed to a channel module corresponding to the current display channel. According to the above solution, touch data is marked to enable a control unit to distribute the touch data to a corresponding channel module, and thus a connection relationship between the channel module and the control unit can be maintained without the requirement of disconnection and reconnection through a switch. Therefore, after the interactive white board first enumerates the touch device when it is turned on, there is no need to re-enumerate the USB device, thereby solving the technical problem in the prior art that there is excessive time consumption due to the necessity of re-enumerating a touch device when a touch display channel is switched through a switch. Moreover, the touch device can be used immediately after the display channel is switched, which improves user comfort.

Optionally, according to the foregoing embodiment of the present application, the distributing the second touch data to the channel module corresponding to the current display channel includes:
Step S7061: Sending the second touch data to a data queue of the channel module.

Step S7063: Sequentially distributing the second touch data in the data queue to the channel module.

### Embodiment 4

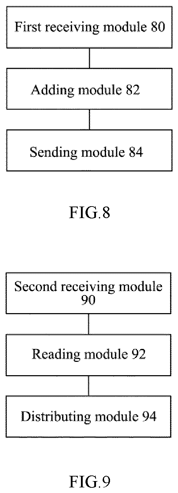

According to an embodiment of the present application, an embodiment of a data processing device for an interactive white board is provided. FIG. 8 is a schematic diagram of a data processing device for an interactive white board according to an embodiment of the present application. As shown in FIG. 8, the device includes:
a first receiving module 80, configured to receive first touch data generated by a touch device;
an adding module 82, configured to mark the first touch data according to a current display channel of the interactive white board to obtain second touch data, where the second touch data includes an identifier corresponding to the current display channel; and
a sending module 84, configured to send the second touch data to a control unit, where the control unit is further configured to distribute the second touch data to the corresponding display channel according to the identifier.

### Embodiment 5

According to an embodiment of the present application, an embodiment of a data processing device for an interactive white board is provided. FIG. 9 is a schematic diagram of a data processing device for an interactive white board according to an embodiment of the present application. As shown in FIG. 9, the device includes:
a second receiving module 90, configured to receive second touch data sent by a device processor, where the second touch data includes an identifier corresponding to a current display channel of the interactive white board;
a reading module 92, configured to read the identifier and determine the current display channel; and
a distributing module 94, configured to distribute the second touch data to a channel module corresponding to the current display channel.

### Embodiment 6

According to an embodiment of the present application, a storage medium is provided. The storage medium includes a stored program, where when the program is running, an interactive white board in which the storage medium is located is controlled to perform the following steps: receiving first touch data generated by a touch device; marking the first touch data according to a current display channel of the interactive white board to obtain second touch data, where the second touch data includes an identifier corresponding to the current display channel; and sending the second touch data to a control unit, where the control unit is further configured to distribute the second touch data to the corresponding display channel according to the identifier.

### Embodiment 7

According to an embodiment of the present application, a processor is provided. The processor is configured to run a program, where the program executes the following steps when the program is running: receiving first touch data generated by a touch device; and marking the first touch according to a current display channel of an interactive white board to obtain second touch data, where the second touch data includes an identifier corresponding to the current display channel; and sending the second touch data to a control unit, where the control unit is further configured to distribute the second touch data to the corresponding display channel according to the identifier.

The serial numbers of the foregoing embodiments of the present application are only for description, and do not represent superiority of the embodiments.

In the above-mentioned embodiments of the present application, the description of each embodiment has its own focus. For parts that are not described in detail in an embodiment, reference may be made to related descriptions of other embodiments.

In the several embodiments provided in the present application, it should be understood that the disclosed technical content can be implemented in other ways. The device embodiments described above are merely illustrative. For example, the division of the units can be a logical function division, and there can be other divisions in actual implementation, for example, multiple units or components can be combined or integrated into another system, or some features can be ignored or not implemented. In addition, the displayed or discussed mutual coupling or direct coupling or communication connection may be indirect coupling or communication connection through some interfaces, units or modules, and may be in electrical or other form.

The units described as separate components may or may not be physically separated, and the components displayed as units may or may not be physical units, that is, they may be located in one place, or they may be distributed on multiple units. Some or all of the units may be selected according to actual needs to achieve the objectives of the solutions of the embodiments.

In addition, the functional units in each embodiment of the present application may be integrated into one processing unit, or each unit may exist alone physically, or two or more units may be integrated into one unit. The above-mentioned integrated unit can be implemented in the form of hardware or software functional unit.

If the integrated unit is implemented in the form of a software functional unit and sold or used as an independent product, it can be stored in a computer readable storage medium. Based on this understanding, the technical solutions of the present application essentially or the part that contributes to the prior art or all or part of the technical solutions can be embodied in the form of a software product, and the computer software product is stored in a storage medium which includes several instructions enabling a computer device (which can be a personal computer, a server, or a network device, etc.) to execute all or part of the steps of the method described in each embodiment of the present application. The aforementioned storage media includes: a U disk, a read-only memory (ROM, Read-Only Memory), a random access memory (RAM, Random Access Memory), a mobile hard disk, a magnetic disk or an optical disk and other media on which program codes can be stored.

The above description is only preferred embodiments of the present application. It should be pointed out that for those of ordinary skill in the art, without departing from the principle of the present application, several improvements and modifications can be made.

### Industrial applicability

As described above, the data processing method, device, system for interactive white board and the interactive white board provided in at least some of the embodiments of the present application have the following beneficial effects: touch data is marked to enable a control unit to distribute the touch data to a corresponding channel module, and thus a connection relationship between the channel module and the control unit can be maintained without the requirement of disconnection and reconnection through a switch. Therefore, after the interactive white board is turned on again, there is no need to re-enumerate the USB device, thereby solving the technical problem in the prior art that there is excessive time consumption due to the necessity of re-enumerating a touch device when a touch display channel is switched through a switch. Moreover, the touch device can be used immediately after the display channel is switched, which improves user comfort.

## Claims

1. An interactive white board, comprising: a touch device (10), a device processor (12), a first control unit (14), and multiple first channel modules (16), wherein the touch device (10) is connected to the device processor (12), the device processor (12) is connected to the touch device (10) and the first control unit (14), and the first control unit (14) is connected to the device processor (12) and the multiple first channel modules (16), wherein:
the touch device (10), is configured to generate first touch data and send the first touch data to the device processor (12);
the device processor (12), is configured to mark the first touch data according to a current display channel to generate second touch data and send the second touch data to the first control unit (14), wherein the second touch data comprises an identifier corresponding to the current display channel;
the first control unit (14), is configured to distribute the second touch data to a corresponding one of the multiple first channel modules (16) according to the identifier corresponding to the current display channel; and
the first channel modules (16), is configured to receive the second touch data and and make a touch response,
**characterized in that** the device processor (12) is further configured to, prior to determining the identifier for marking the first touch data according to the current display channel of the interactive white board, perform the following steps:
detecting whether the display channel changes, wherein the display channel changes when the interactive white board switches a channel module;
if the display channel changes, detecting whether a last set of touch data before the display channel changes is in its integrity; and
if the last set of touch data before the display channel changes is not in its integrity, using supplementary points to supplement an end point of the last set of touch data before the display channel changes and a start point of a first set of touch data after the display channel changes, wherein the supplementary points are first touch points after the display channel changes.

2. The interactive white board according to claim 1, further comprising:
at least one second control unit ,wherein the second control unit is connected in series with the first control unit, wherein the second control unit is connected to multiple second channel modules through corresponding display channels;
wherein the first control unit is further configured to send the second touch data to the second control unit when the display channel corresponding to the second touch data is a display channel of any second channel module, and the second control unit is configured to send the received second touch data to a corresponding one of the multiple second channel modules.

3. The interactive white board according to claim 1 or claim 2, wherein the identifier comprises at least one byte, and a bit of the byte corresponds to one of the first channel modules.

4. The interactive white board according to claim 1 or claim 2, wherein the touch device (10) is one of electromagnetic touch device, infrared touch device, or capacitive touch device, and the first channel is one of a PC module, an Android module or an output module.

5. A data processing method for an interactive white board, comprising:
receiving first touch data generated by a touch device (10);
marking the first touch data according to a current display channel of the interactive white board to generate second touch data, wherein the second touch data comprises an identifier corresponding to the current display channel; and
sending the second touch data to a channel control unit, wherein the control unit is configured to distribute the second touch data to the corresponding display channel according to the identifier;
receiving the second touch data and making a touch response by the channel module;
**characterized in that** the data processing method further comprises, prior to determining the identifier for marking the first touch data according to the current display channel of the interactive white board, the following steps:
detecting whether the display channel changes, wherein the display channel changes when the interactive white board switches a channel module;
if the display channel changes, detecting whether a last set of touch data before the display channel changes is in its integrity; and
if the last set of touch data before the display channel changes is not in its integrity, using supplementary points to supplement an end point of the last set of touch data before the display channel changes and a start point of a first set of touch data after the display channel changes, wherein the supplementary points are first touch points after the display channel changes.

6. The method according to claim 5, wherein the receiving the first touch data generated by the touch device comprises:
enumerating the touch device;
selecting data generated by the touch device out of the received data according to a device identifier of the touch device; and
selecting, according to characteristic information of touch data, the touch data out of the data generated by the touch device as the first touch data.

7. The method according to claim 5 or claim 6, wherein the marking the first touch data according to the current display channel of the interactive white board to generate the second touch data further comprises:
determining, according to the current display channel of the interactive white board, an identifier for marking the first touch data; and
placing the identifier into a data packet of the first touch data, and marking the first touch data according to the identifier to generate the second touch data.

8. The method according to claim 7, wherein a display channel has a corresponding identifier.

9. The method according to any one of the claims 5 to 8, wherein the determining, according to the current display channel of the interactive white board, the identifier for marking the first touch data comprises:
acquiring a target bit corresponding to the current display channel of the interactive white board, wherein the identifier comprises multiple bits, and each bit corresponds to a display channel; and
setting a value of the target bit in the identifier to be opposite to a value of a remaining bit to generate the identifier for marking the first touch data.

10. The method according to claim 6, wherein after the enumerating the touch device, the method further comprises:
using the first touch data to drive an input subsystem; and
responding to the first touch data.

11. The method according to any one of the claims 5 to 10,
wherein the sending the second touch data to the corresponding channel module according to the identifier corresponding to the current display channel comprises:
sending the second touch data to a data queue of the channel module; and
sequentially distributing the second touch data in the data queue to the channel module.

12. The method according to any one of the claims 5 to 11, wherein the touch device is one of electromagnetic touch device, infrared touch device or capacitive touch device, and the first channel is one of a PC module, an Android module or an output module.

13. A storage medium comprising a stored program, wherein when the program is running, an interactive white board in which the storage medium is located is controlled to perform following steps: receiving first touch data generated by a touch device; marking the first touch data according to a current display channel of the interactive white board to generate second touch data, wherein the second touch data comprises an identifier corresponding to the current display channel; sending the second touch data to a control unit, wherein the control unit is further configured to distribute the second touch data to the corresponding display channel according to the identifier,
**characterized in that** the interactive white board is further controlled to, prior to determining the identifier for marking the first touch data according to the current display channel of the interactive white board, perform the following steps:
detecting whether the display channel changes, wherein the display channel changes when the interactive white board switches a channel module;
if the display channel changes, detecting whether a last set of touch data before the display channel changes is in its integrity; and
if the last set of touch data before the display channel changes is not in its integrity, using supplementary points to supplement an end point of the last set of touch data before the display channel changes and a start point of a first set of touch data after the display channel changes, wherein the supplementary points are first touch points after the display channel changes.

14. A processor configured to run a program, wherein the program executes following steps when the program runs: receiving first touch data generated by a touch device; marking the first touch data according to a current display channel of an interactive white board to generate second touch data, wherein the second touch data comprises an identifier corresponding to the current display channel; sending the second touch data to a control unit, wherein the control unit is further configured to distribute the second touch data to the corresponding display channel according to the identifier,
**characterized in that** the program further executes, prior to determining the identifier for marking the first touch data according to the current display channel of the interactive white board, the following steps:
detecting whether the display channel changes, wherein the display channel changes when the interactive white board switches a channel module;
if the display channel changes, detecting whether a last set of touch data before the display channel changes is in its integrity; and
if the last set of touch data before the display channel changes is not in its integrity, using supplementary points to supplement an end point of the last set of touch data before the display channel changes and a start point of a first set of touch data after the display channel changes, wherein the supplementary points are first touch points after the display channel changes.

## Patentansprüche

1. Interaktives Whiteboard, umfassend: eine Berührungsvorrichtung (10), ein Vorrichtungsprozessor (12), eine erste Steuereinheit (14) und mehrere erste Kanalmodule (16), wobei die Berührungsvorrichtung (10) mit dem Vorrichtungsprozessor (12) verbunden ist, der Vorrichtungsprozessor (12) mit der Berührungsvorrichtung (10) und der ersten Steuereinheit (14) verbunden ist, und die erste Steuereinheit (14) mit dem Vorrichtungsprozessor (12) und den mehreren ersten Kanalmodulen (16) verbunden ist, wobei:
die Berührungsvorrichtung (10) ist so konfiguriert, dass sie die ersten Berührungsdaten erzeugt und die ersten Berührungsdaten an den Vorrichtungsprozessor (12) sendet;
der Vorrichtungsprozessor (12) so konfiguriert ist, dass er die ersten Berührungsdaten entsprechend einem aktuellen Anzeigekanal markiert, um zweite Berührungsdaten zu erzeugen und die zweiten Berührungsdaten an die erste Steuereinheit (14) zu senden, wobei die zweiten Berührungsdaten einen Identifikator umfassen, der dem aktuellen Anzeigekanal entspricht;
die erste Steuereinheit (14) so konfiguriert ist, dass sie die zweiten Berührungsdaten an ein entsprechendes der mehreren ersten Kanalmodule (16) entsprechend dem Identifikator, der dem aktuellen Anzeigekanal entspricht, verteilt; und
das erste Kanalmodul (16), so konfiguriert ist, dass es die zweiten Berührungsdaten empfängt und eine Berührungsantwort gibt,
**dadurch gekennzeichnet, dass** der Vorrichtungsprozessor (12) ferner so konfiguriert ist, vor der Bestimmung des Identifikators zur Markierung der ersten Berührungsdaten entsprechend dem aktuellen Anzeigekanal des interaktiven Whiteboards die folgenden Schritte auszuführen:
Erkennen, ob sich der Anzeigekanal ändert, wobei sich der Anzeigekanal ändert, wenn das interaktive Whiteboard ein Kanalmodul wechselt;
wenn sich der Anzeigekanal ändert, erkennen, ob ein letzter Satz von Berührungsdaten vor dem Wechsel des Anzeigekanals in seiner Integrität ist, und
wenn der letzte Satz von Berührungsdaten vor dem Wechsel des Anzeigekanals nicht in seiner Integrität ist, zusätzliche Punkte verwenden, um einen Endpunkt des letzten Satzes von Berührungsdaten vor dem Wechsel des Anzeigekanals und einen Startpunkt eines ersten Satzes von Berührungsdaten nach dem Wechsel des Anzeigekanals zu ergänzen, wobei die zusätzlichen Punkte erste Berührungspunkte nach dem Wechsel des Anzeigekanals sind.

2. Interaktives Whiteboard nach Anspruch 1, ferner umfassend:
mindestens eine zweite Steuereinheit, wobei die zweite Steuereinheit in Reihe mit dem ersten Steuereinheit verbunden ist, wobei die zweite Steuereinheit ist über entsprechende Anzeigekanäle mit mehreren zweiten Kanalmodulen verbunden;
wobei die erste Steuereinheit ferner so konfiguriert ist, dass sie die zweiten Berührungsdaten an die zweite Steuereinheit sendet, wenn der den zweiten Berührungsdaten entsprechende Anzeigekanal ein Anzeigekanal eines beliebigen zweiten Kanalmoduls ist, und die zweite Steuereinheit so konfiguriert ist, dass sie die empfangenen zweiten Berührungsdaten an ein entsprechendes der mehreren zweiten Kanalmodulen sendet.

3. Interaktives Whiteboard nach Anspruch 1 oder Anspruch 2, wobei der Identifikator umfasst mindestens ein Byte, und ein Bit des Bytes entspricht einem der ersten Kanalmodule.

4. Interaktives Whiteboard nach Anspruch 1 oder Anspruch 2, wobei die Berührungsvorrichtung (10) eine elektromagnetische Berührungsvorrichtung, eine Infrarot-Berührungsvorrichtung oder eine kapazitive Berührungsvorrichtung ist und der erste Kanal ein PC-Modul, ein Android-Modul oder ein Ausgangsmodul ist.

5. Datenverarbeitungsverfahren für ein Interaktives Whiteboard, umfassend:
Empfang erster Berührungsdaten, die von einer Berührungsvorrichtung (10) erzeugt werden;
Markierung der ersten Berührungsdaten entsprechend einem aktuellen Anzeigekanal des interaktiven Whiteboards, um zweite Berührungsdaten zu erzeugen, wobei die zweiten Berührungsdaten einen dem aktuellen Anzeigekanal entsprechenden Identifikator umfassen; und
Sendung der zweiten Berührungsdaten an eine Kanalsteuereinheit, wobei die Steuereinheit so konfiguriert ist, dass sie die zweiten Berührungsdaten entsprechend dem Identifikator an den entsprechenden Anzeigekanal verteilt;
Empfang der zweiten Berührungsdaten und Durchführung einer Berührungsantwort durch das Kanalmodul;
**dadurch gekennzeichnet, dass** das Datenverarbeitungsverfahren vor der Bestimmung des Identifikators für die Markierung der ersten Berührungsdaten entsprechend dem aktuellen Anzeigekanal des interaktiven Whiteboards ferner die folgenden Schritte umfasst:
Erkennen, ob sich der Anzeigekanal ändert, wobei sich der Anzeigekanal ändert, wenn das interaktive Whiteboard ein Kanalmodul wechselt;
wenn sich der Anzeigekanal ändert, Erkennen, ob ein letzter Satz von Berührungsdaten vor dem Wechsel des Anzeigekanals in seiner Integrität ist; und
wenn der letzte Satz von Berührungsdaten vor dem Wechsel des Anzeigekanals nicht in seiner Integrität ist, zusätzlicher Punkte verwenden, um einen Endpunkt des letzten Satzes von Berührungsdaten vor dem Wechsel des Anzeigekanals und einen Startpunkt eines ersten Satzes von Berührungsdaten nach dem Wechsel des Anzeigekanals zu ergänzen, wobei die zusätzlichen Punkte erste Berührungspunkte nach dem Wechsel des Anzeigekanals sind.

6. Verfahren nach Anspruch 5, wobei das Empfangen der ersten von der Berührungsvorrichtung erzeugten Berührungsdaten Folgendes umfasst:
die Aufzählung der Berührungsvorrichtung;
Auswahl von Daten, die von der Berührungsvorrichtung erzeugt wurden, aus den empfangenen Daten entsprechend einem Vorrichtungsidentifikator der Berührungsvorrichtung; und
Auswahl der Berührungsdaten aus den von der Berührungsvorrichtung erzeugten Daten als erste Berührungsdaten entsprechend den charakteristischen Informationen der Berührungsdaten.

7. Verfahren nach Anspruch 5 oder Anspruch 6, wobei die Markierung der ersten Berührungsdaten entsprechend dem aktuellen Anzeigekanal des interaktiven Whiteboards zum Erzeugen der zweiten Berührungsdaten ferner umfasst:
Bestimmen eines Identifikators zur Markierung der ersten Berührungsdaten entsprechend dem aktuellen Anzeigekanal des interaktiven Whiteboards; und
Einfügen des Identifikators in ein Datenpaket der ersten Berührungsdaten und Markieren der ersten Berührungsdaten entsprechend dem Identifikator, um die zweiten Berührungsdaten zu erzeugen.

8. Verfahren nach Anspruch 7, wobei ein Anzeigekanal einen entsprechenden Identifikator hat.

9. Verfahren nach einem der Ansprüche 5 bis 8, wobei die Bestimmung des Identifikators für die Markierung der ersten Berührungsdaten entsprechend dem aktuellen Anzeigekanal des interaktiven Whiteboards umfasst:
Erfassen eines Zielbits, das dem aktuellen Anzeigekanal des interaktiven Whiteboards entspricht, wobei der Identifikator mehrere Bits umfasst und jedes Bit einem Anzeigekanal entspricht; und
Setzen eines Wertes des Zielbits im Identifikator, so dass er einem Wert eines verbleibenden Bits entgegengesetzt ist, um den Identifikator zur Markierung der ersten Berührungsdaten zu erzeugen.

10. Verfahren nach Anspruch 6, wobei das Verfahren nach dem Aufzählen des Berührungsvorrichtungs ferner umfasst:
Verwendung der ersten Berührungsdaten zur Ansteuerung eines Eingabe-Subsystems; und
Reagieren auf die ersten Berührungsdaten.

11. Verfahren nach einem der Ansprüche 5 bis 10, wobei das Senden der zweiten Berührungsdaten an das entsprechende Kanalmodul entsprechend dem dem aktuellen Anzeigekanal entsprechenden Identifikator umfasst:
Sendung der zweiten Berührungsdaten an eine Datenwarteschlange des Kanalmoduls; und
sequentielle Verteilung der zweiten Berührungsdaten in der Datenwarteschlange an das Kanalmodul.

12. Verfahren nach einem der Ansprüche 5 bis 11, wobei die Berührungsvorrichtung eine elektromagnetische Berührungsvorrichtung, eine Infrarot-Berührungsvorrichtung oder eine kapazitive Berührungsvorrichtung ist und der erste Kanal ein PC-Modul, ein Android-Modul oder ein Ausgangsmodul ist.

13. Speichermedium, das ein gespeichertes Programm umfasst, wobei, wenn das Programm läuft, ein Interaktives Whiteboard, in der sich das Speichermedium befindet, gesteuert wird, um die folgenden Schritte auszuführen: Empfangen erster Berührungsdaten, die durch eine Berührungsvorrichtung erzeugt werden; Markieren der ersten Berührungsdaten entsprechend einem aktuellen Anzeigekanal des interaktiven Whiteboards, um zweite Berührungsdaten zu erzeugen, wobei die zweiten Berührungsdaten einen Identifikator umfassen, der dem aktuellen Anzeigekanal entspricht; Senden der zweiten Berührungsdaten an eine Steuereinheit, wobei die Steuereinheit ferner so konfiguriert ist, dass sie die zweiten Berührungsdaten entsprechend dem Identifikator an den entsprechenden Anzeigekanal verteilt;
**dadurch gekennzeichnet, dass** das Interaktives Whiteboard ferner so gesteuert wird, um vor der Bestimmung des Identifikators für die Markierung der ersten Berührungsdaten entsprechend dem aktuellen Anzeigekanal des interaktiven Whiteboards die folgenden Schritte auszuführen:
Erkennen, ob sich der Anzeigekanal ändert, wobei sich der Anzeigekanal ändert, wenn das interaktive Whiteboard ein Kanalmodul wechselt;
wenn sich der Anzeigekanal ändert, Erkennen, ob ein letzter Satz von Berührungsdaten vor dem Wechsel des Anzeigekanals in seiner Integrität ist, und
wenn der letzte Satz von Berührungsdaten vor dem Wechsel des Anzeigekanals nicht in seinem Integrität ist, zusätzliche Punkte verwenden, um einen Endpunkt des letzten Satzes von Berührungsdaten vor dem Wechsel des Anzeigekanals und einen Startpunkt eines ersten Satzes von Berührungsdaten nach dem Wechsel des Anzeigekanals zu ergänzen, wobei die zusätzlichen Punkte erste Berührungspunkte nach dem Wechsel des Anzeigekanals sind.

14. Ein Prozessor, der so konfiguriert ist, dass er ein Programm ausführt, wobei das Programm die folgende Schritte ausführt, wenn das Programm läuft: Empfangen von ersten Berührungsdaten, die von einer Berührungsvorrichtung erzeugt werden; Markieren der ersten Berührungsdaten entsprechend einem aktuellen Anzeigekanal eines interaktiven Whiteboards, um zweite Berührungsdaten zu erzeugen, wobei die zweiten Berührungsdaten einen Identifikator umfassen, der dem aktuellen Anzeigekanal entspricht; Senden der zweiten Berührungsdaten an eine Steuereinheit, wobei die Steuereinheit ferner so konfiguriert ist, dass sie die zweiten Berührungsdaten entsprechend dem Identifikator an den entsprechenden Anzeigekanal verteilt;
**dadurch gekennzeichnet, dass** das Programm vor der Bestimmung des Identifikators für die Markierung der ersten Berührungsdaten entsprechend dem aktuellen Anzeigekanal des interaktiven Whiteboards die folgenden Schritte ausführt:
Erkennen, ob sich der Anzeigekanal ändert, wobei sich der Anzeigekanal ändert, wenn das interaktive Whiteboard ein Kanalmodul wechselt;
wenn sich der Anzeigekanal ändert, Erkennen, ob ein letzter Satz von Berührungsdaten vor dem Wechsel des Anzeigekanals in seiner Integrität ist; und
wenn der letzte Satz von Berührungsdaten vor dem Wechsel des Anzeigekanals nicht in seiner Integrität ist, zusätzliche Punkte verwenden, um einen Endpunkt des letzten Satzes von Berührungsdaten vor dem Wechsel des Anzeigekanals und einen Startpunkt eines ersten Satzes von Berührungsdaten nach dem Wechsel des Anzeigekanals zu ergänzen, wobei die zusätzlichen Punkte erste Berührungspunkte nach dem Wechsel des Anzeigekanals sind.

## Revendications

1. Tableau blanc interactif, comprenant : un dispositif tactile (10), un processeur de dispositif (12), une première unité de commande (14), et de multiples modules de premier canal (16), le dispositif tactile (10) étant connecté au processeur de dispositif (12), le processeur de dispositif (12) est connecté au dispositif tactile (10) et à la première unité de commande (14), et la première unité de commande (14) est connectée au processeur de dispositif (12) et aux multiples modules de première canal (16), dans laquelle :
le dispositif tactile (10) est configuré pour générer des premières données tactiles et envoyer les premières données tactiles au processeur de dispositif (12) ;
le processeur de dispositif (12) est configuré pour marquer les premières données tactiles en fonction d'un canal d'affichage courant pour générer des deuxièmes données tactiles et envoyer les deuxièmes données tactiles à la première unité de commande (14), les deuxièmes données tactiles comprenant un identifiant correspondant au canal d'affichage courant ;
la première unité de commande (14) est configurée pour distribuer les deuxièmes données tactiles à l'un des multiples modules de premier canal correspondant (16) en fonction de l'identifiant correspondant au canal d'affichage courant ; et
le premier module de canal (16) est configuré pour recevoir les deuxièmes données tactiles et faire une réponse tactile,
**caractérisé en ce que** le processeur de dispositif (12) est en outre configuré pour, avant de déterminer l'identifiant pour marquer les premières données tactiles en fonction du canal d'affichage courant du tableau blanc interactif, effectuer les étapes suivantes :
détecter si le canal d'affichage change, le canal d'affichage changeant lorsque le tableau blanc interactif change de module de canal ;
en cas du changement du canal d'affichage, détecter si un dernier ensemble de données tactiles avant le changement du canal d'affichage se trouve dans son intégrité, et
si le dernier ensemble de données tactiles avant le changement du canal d'affichage ne se trouve pas dans son intégrité, utiliser des points supplémentaires pour compléter un point final du dernier ensemble de données tactiles avant le changement du canal d'affichage et un point de départ d'un premier ensemble de données tactiles après le changement du canal d'affichage, les points supplémentaires étant les premiers points tactiles après le changement du canal d'affichage.

2. Tableau blanc interactif selon la revendication 1, comprenant en outre :
au moins une deuxième unité de commande, dans laquelle la deuxième unité de commande est connectée en série à la première unité de commande, dans laquelle la deuxième unité de commande est connectée à de multiples modules de deuxième canal par l'intermédiaire de canaux d'affichage correspondants ;
dans lequel la première unité de commande est en outre configurée pour envoyer les deuxièmes données tactiles à la deuxième unité de commande lorsque le canal d'affichage correspondant aux deuxièmes données tactiles est un canal d'affichage de n'importe quel deuxième module de canal, et la deuxième unité de commande est configurée pour envoyer les deuxièmes données tactiles reçues à un module correspondant des multiples modules de deuxième canal.

3. Tableau blanc interactif selon la revendication 1 ou la revendication 2, dans lequel l'identifiant comprend au moins un octet, et un bit de l'octet correspond à l'un des premiers modules de canal.

4. Tableau blanc interactif selon la revendication 1 ou la revendication 2, dans lequel le dispositif tactile (10) est l'un parmi : dispositif tactile électromagnétique, dispositif tactile infrarouge, ou dispositif tactile capacitif, et le premier canal est l'un parmi: module PC, un module Android ou un module de sortie.

5. Méthode de traitement des données pour un tableau blanc interactif, comprenant :
recevoir des premières données tactiles générées par un dispositif tactile (10) ;
marquer les premières données tactiles en fonction d'un canal d'affichage courant du tableau blanc interactif pour générer des deuxièmes données tactiles, les deuxièmes données tactiles comprenant un identifiant correspondant au canal d'affichage courant ; et
envoyer les deuxièmes données tactiles à une unité de commande de canal, l'unité de commande étant configurée pour distribuer les deuxièmes données tactiles au canal d'affichage correspondant en fonction de l'identifiant ;
recevoir les deuxièmes données tactiles et effectuer une réponse tactile de la part du module de canal ;
**caractérisé en ce que** la méthode de traitement des données comprend en outre, avant de déterminer l'identifiant pour marquer les premières données tactiles en fonction du canal d'affichage courant du tableau blanc interactif, les étapes suivantes :
détecter si le canal d'affichage change, le canal d'affichage changeant lorsque le tableau blanc interactif change de module de canal ;
en cas du changement du canal d'affichage, détecter si un dernier ensemble de données tactiles avant le changement du canal d'affichage se trouve dans son intégrité ;
si le dernier ensemble de données tactiles avant le changement du canal d'affichage ne se trouve pas dans son intégrité, utiliser des points supplémentaires pour compléter un point final du dernier ensemble de données tactiles avant le changement du canal d'affichage et un point de départ d'un premier ensemble de données tactiles après le changement du canal d'affichage, les points supplémentaires étant les premiers points tactiles après le changement du canal d'affichage.

6. Méthode selon la revendication 5, dans laquelle la réception des premières données tactiles générées par le dispositif tactile comprend :
énumérer le dispositif tactile ;
sélectionner les données générées par le dispositif tactile parmi les données reçues en fonction d'un identifiant de dispositif du dispositif tactile ; et
sélectionner, en fonction des informations caractéristiques des données tactiles, les données tactiles parmi les données générées par le dispositif tactile en tant que premières données tactiles.

7. Méthode selon la revendication 5 ou la revendication 6, dans laquelle le marquage des premières données tactiles en fonction du canal d'affichage courant du tableau blanc interactif pour générer les deuxièmes données tactiles comprend en outre:
déterminer, en fonction du canal d'affichage courant du tableau blanc interactif, un identifiant pour marquer les premières données tactiles ; et
placer l'identifiant dans un paquet de données des premières données tactiles, et marquer les premières données tactiles en fonction de l'identifiant pour générer les deuxièmes données tactiles.

8. Méthode selon la revendication 7, dans laquelle un canal d'affichage a un identifiant correspondant.

9. Méthode selon n'importe quelle des revendications 5 à 8, dans laquelle la détermination, en fonction du canal d'affichage courant du tableau blanc interactif, de l'identifiant pour marquer les premières données tactiles comprend :
acquérir un bit cible correspondant au canal d'affichage courant du tableau blanc interactif, dans lequel l'identifiant comprend de multiples bits, et chaque bit correspond à un canal d'affichage ; et
fixer une valeur du bit cible dans l'identifiant de manière à ce qu'elle soit opposée à une valeur d'un bit restant pour générer l'identifiant afin de marquer les premières données tactiles.

10. Méthode selon la revendication 6, dans laquelle, après l'énumération du dispositif tactile, la méthode comprend en outre :
utiliser les premières données tactiles pour actionner un sous-système d'entrée ;
et
répondre aux premières données tactiles.

11. Méthode selon n'importe quelle des revendications 5 à 10, dans laquelle l'envoi des deuxièmes données tactiles au module de canal correspondant selon l'identifiant correspondant au canal d'affichage courant comprend :
envoyer les deuxièmes données tactiles à une file d'attente de données du module de canal ; et
distribuer séquentiellement les deuxièmes données tactiles de la file d'attente de données au module de canal.

12. Méthode selon l'une des revendications 5 à 11, dans laquelle le dispositif tactile est l'un parmi : un dispositif tactile électromagnétique, un dispositif tactile infrarouge ou un dispositif tactile capacitif, et le premier canal est l'un parmi : un module PC, un module Android ou un module de sortie.

13. Support de stockage comprenant un programme stocké, dans lequel, lorsque le programme est en cours d'exécution, un tableau blanc interactif dans lequel se trouve le support de stockage est commandé pour effectuer les étapes suivantes : la réception des premières données tactiles générées par un dispositif tactile ; le marquage des premières données tactiles en fonction d'un canal d'affichage courant du tableau blanc interactif afin de générer des deuxièmes données tactiles, les deuxièmes données tactiles comprenant un identifiant correspondant au canal d'affichage courant ; l'envoi des deuxièmes données tactiles à une unité de commande, l'unité de commande étant en outre configurée pour distribuer les deuxièmes données tactiles au canal d'affichage correspondant, en fonction de l'identifiant ;
**caractérisé en ce que** le tableau blanc interactif est en outre commandé pour, avant de déterminer l'identifiant pour marquer les premières données tactiles en fonction du canal d'affichage courant du tableau blanc interactif, effectuer les étapes suivantes :
détecter si le canal d'affichage change, le canal d'affichage changeant lorsque le tableau blanc interactif change de module de canal ;
en cas du changement du canal d'affichage, détecter si un dernier ensemble de données tactiles avant le changement du canal d'affichage se trouve dans son intégrité ; et
si le dernier ensemble de données tactiles avant le changement du canal d'affichage ne se trouve pas dans son intégrité, utiliser des points supplémentaires pour compléter un point final du dernier ensemble de données tactiles avant le changement du canal d'affichage et un point de départ d'un premier ensemble de données tactiles après le changement du canal d'affichage, les points supplémentaires étant les premiers points tactiles après le changement du canal d'affichage.

14. Processeur configuré pour exécuter un programme, dans lequel le programme exécute les étapes suivantes lors de l'exécution du programme : la réception des premières données tactiles générées par un dispositif tactile ; le marquage des premières données tactiles en fonction d'un canal d'affichage courant d'un tableau blanc interactif pour générer des deuxièmes données tactiles, les deuxièmes données tactiles comprenant un identifiant correspondant au canal d'affichage courant ; l'envoi des deuxièmes données tactiles à une unité de commande, l'unité de commande étant en outre configurée pour distribuer les deuxièmes données tactiles au canal d'affichage correspondant en fonction de l'identifiant ;
**caractérisé en ce que** le programme exécute en outre, avant de déterminer l'identifiant pour marquer les premières données tactiles en fonction du canal d'affichage courant du tableau blanc interactif, les étapes suivantes :
détecter si le canal d'affichage change, le canal d'affichage changeant lorsque le tableau blanc interactif change de module de canal ;
en cas du changement du canal d'affichage, détecter si un dernier ensemble de données tactiles avant le changement du canal d'affichage se trouve dans son intégrité ; et
si le dernier ensemble de données tactiles avant le changement du canal d'affichage ne se trouve pas dans son intégrité, utiliser des points supplémentaires pour compléter un point final du dernier ensemble de données tactiles avant le changement du canal d'affichage et un point de départ d'un premier ensemble de données tactiles après le changement du canal d'affichage, les points supplémentaires étant les premiers points tactiles après le changement du canal d'affichage.
